# FASCICULE DE BREVET EUROPEEN

(11) **EP 3 628 065 B1**
(45) Date de publication et mention de la délivrance du brevet: **11.05.2022**
(21) Numéro de dépôt: 18730846.5
(22) Date de dépôt: 11.05.2018
(51) Int. Cl.: G01M 3/04, G01M 3/16

(54) **CÂBLE DÉTECTEUR DE LIQUIDES CONDUCTEURS ET NON CONDUCTEURS**
KABEL ZUM NACHWEIS VON LEITENDEN UND NICHTLEITENDEN FLÜSSIGKEITEN
CABLE DETECTING CONDUCTIVE AND NON-CONDUCTIVE LIQUIDS

(30) Priorité: 12.05.2017 FR 1770485
(43) Date de publication de la demande: 01.04.2020
(73) Titulaire: Elsa Advanced Systems Pte Ltd, Singapore 318995 (SG)
(72) Inventeur: DABETIC, Sasha, 78310 Maurepas (FR)
(74) Mandataire: Célanie, Christian
(86) Numéro de dépôt international: PCT/IB2018/000593
(87) Numéro de publication internationale: WO 2018/207021

(56) Documents cités:
- WO-A1-2015/067615
- FR-A1- 2 773 613
- US-A- 5 341 128

## Description

Le secteur technique de la présente invention est celui de la détection des fuites de liquides, conducteurs et non conducteurs, notamment dans le domaine du transport et du stockage des hydrocarbures.

Il est bien connu que les conduites et cuves de stockage sont susceptibles de subir des fuites difficiles à repérer quand ces structures sont enterrées. Les hydrocarbures sont des produits toxiques qui constituent un risque pour l'environnement et la santé humaine. Il est donc particulièrement important de pouvoir détecter une fuite et de pouvoir la situer.

Il existe dans l'art antérieur de nombreuses méthodes de détection de la présence des hydrocarbures dans l'air, le sol, l'eau ou à la surface de l'eau ou du sol, parmi lesquelles les nez électroniques, les indicateurs visuels constitués de composants réactifs, les capteurs optiques, les capteurs d'un point d'absorption, les câbles détecteurs et d'autres encore.

Les câbles détecteurs présentent l'intérêt de permettre la surveillance en continu de tuyaux et de réservoirs sur toute leur longueur et toute leur circonférence.

Dans le domaine des câbles détecteurs, l'art antérieur décrit différentes réalisations de systèmes de détection des fuites de liquides non conducteurs.

Le brevet US5101657 décrit un câble détecteur comprenant un élément conducteur ou semi-conducteur expansible qui, lors d'un contact avec un liquide non-conducteur, subit une expansion qui provoque mécaniquement la mise en contact électrique de deux conducteurs séparés.

Le brevet US5410255 décrit un procédé de détection permettant de distinguer les fuites de liquides conducteurs des fuites de liquides non conducteurs, mais ce procédé ne permet pas de détecter le degré d'immersion du câble détecteur dans un liquide conducteur. Il décrit également l'utilisation de l'absorption d'un hydrocarbure par un milieu approprié, ce qui modifie les propriétés électriques de ce milieu, modification détectée par le système de surveillance lié.

Les brevets WO2015067615 et US5341128 décrivent un élément détecteur conducteur ou semi-conducteur qui perd partiellement ou complètement sa conductance quand il entre en contact avec un liquide non conducteur.

Ces technologies sont adaptées à être utilisées sur des installations extérieures et peuvent être utilisées pour surveiller les pipelines et les réservoirs de transport.

Cependant, si les câbles détecteurs en question sont immergés dans un liquide conducteur, par exemple l'eau, ils ne pourront pas détecter les liquides non conducteurs, par exemple les hydrocarbures, qui flotteront en surface. Par ailleurs, aucun de ces câbles prévus pour la détection des liquides non conducteurs ne permet de détecter l'immersion dans l'eau. L'utilisateur peut donc rester un temps très long sans savoir que le système de surveillance est neutralisé par l'immersion dans l'eau.

Le but de la présente invention est donc de fournir un système de détection de fuites de liquides comprenant un câble détecteur qui permette de détecter à la fois les fuites de liquides non conducteurs, tels que les hydrocarbures, et de liquides conducteurs, tels que l'eau, les bases ou les acides.

L'invention a donc pour objet un système de détection de fuites de liquides tel que défini dans la présente revendication Ce système comprend notamment un câble détecteur de fuites de liquides conducteurs et non conducteurs par exemple stockés dans une cuve ou circulant dans une conduite, composé d'un corps principal et d'au moins un élément détecteur constitué d'un fil métallique central entouré d'une gaine isolante, elle-même intégrée dans une gaine expansible conductrice, le fil métallique central et la gaine expansible conductrice étant disposés de manière à entrer en contact avec les fluides conducteurs et non conducteurs.

Selon une caractéristique de l'invention, le corps principal est réalisé par extrusion d'une matière plastique.

Selon encore une caractéristique de l'invention, le corps principal est extrudé sur un support central se présentant sous la forme soit d'une tige de matière plastique, soit d'une tige métallique enrobée de matière plastique.

Selon encore une caractéristique de l'invention, le câble détecteur de fuites de liquides dans lequel l'élément détecteur est enroulé en spirale autour du corps principal.

Selon encore une caractéristique de l'invention, l'élément détecteur est constitué d'un fil métallique central recouvert d'une gaine isolante elle-même recouverte d'une gaine conductrice expansible.

Selon encore une caractéristique de l'invention, la dite gaine conductrice expansible de l'élément détecteur est partiellement recouverte d'une gaine isolante, l'ensemble présentant en section une forme circulaire ou ovale.

Selon encore une caractéristique de l'invention, la dite gaine isolante est constituée de matériau polymère.

Selon encore une caractéristique de l'invention, la gaine conductrice expansible et la gaine partielle isolante sont fabriquées à l'aide d'un matériau silicone.

Selon encore une caractéristique de l'invention, l'élément détecteur partiellement recouvert de la gaine isolante est inerte face aux dépôts de poussières métalliques.

L'invention a également pour objet un câble détecteur inséré dans une gaine tressée ajourée isolante électriquement.

Un tout premier avantage de l'invention réside dans la détection simultanée des fluides conducteurs et non conducteurs à l'aide d'une structure compacte.

Un avantage de l'invention réside dans l'utilisation du silicone comme gaine conductrice expansible. En effet, c'est un matériau facile à travailler et qui possède en outre une propriété de percolation des liquides non conducteurs qui l'imprègnent. Cette propriété empêche l'expansion de la gaine avant qu'elle ne soit imbibée d'une quantité conséquente d'hydrocarbures.

Un autre avantage du détecteur selon l'invention est que la gaine expansible est conductrice. En effet, cela permet de surveiller efficacement la capacité du détecteur à détecter la présence de liquides non conducteurs.

Un autre avantage du détecteur selon l'invention est la présence d'une gaine isolante partielle autour de l'élément détecteur ou du câble détecteur lui-même, qui empêche l'élément détecteur d'entrer en contact avec des pièces conductrices présentes dans l'environnement (tresses métalliques, tuyaux, poussières, etc...) ce qui provoquerait une fausse alerte.

Un autre avantage du détecteur selon l'invention réside dans le fait d'utiliser du silicone contenant des particules conductrices de l'électricité, comme du carbone par exemple, pour la gaine conductrice expansible et du silicone coloré pour la gaine partielle isolante. Ainsi, les deux couches de matériau adhèrent parfaitement l'une à l'autre et créent un ensemble solidaire.

Un autre avantage de l'invention réside dans le fait que le même élément détecteur réalise les fonctions de détection des fluides conducteurs et des fluides non conducteurs permettant de simplifier grandement la fabrication du câble détecteur.

Un autre avantage de l'invention est d'utiliser un élément détecteur de section ovale. La forme ovale assure, lors de l'enroulement de l'élément détecteur autour du corps principal, que la gaine isolante partielle, qui est la partie aplatie, prenne place contre le corps principal et adopte ainsi une disposition spatiale optimale.

Un autre avantage de l'invention réside dans l'utilisation de matériau silicone de couleurs différentes pour la gaine conductrice et la gaine isolante, ce qui permet de les repérer et de les identifier visuellement de manière simple et rapide.

D'autres caractéristiques, détails et avantages de l'invention seront mieux compris à la lecture du complément de description qui va suivre de modes de réalisation donnés à titre d'exemple en relation avec des dessins sur lesquels :
- la figure 1 est une coupe transversale d'un élément détecteur de fluides,
- la figure 2 est une vue en coupe longitudinale de l'élément détecteur de la figure 1,
- la figure 3 est une autre vue en coupe longitudinale de l'extrémité de l'élément détecteur de la figure 1,
- la figure 4 est une coupe transversale d'un deuxième mode de réalisation d'un élément détecteur de fluides, de section ronde,
- la figure 5 est une coupe transversale d'un élément détecteur de fluides de section ovale,
- la figure 6 est une vue de profil d'un câble détecteur,
- la figure 7 est une vue de profil d'un câble détecteur muni d'une gaine tressée ajourée,
- la figure 8 est une coupe transversale du câble détecteur selon XX de la figure 6,
- la figure 9 est une coupe transversale du câble détecteur selon YY de la figure 7, et
- la figure 10 est un schéma du circuit électrique intégrant le câble détecteur relié à un système de veille et d'alarme.

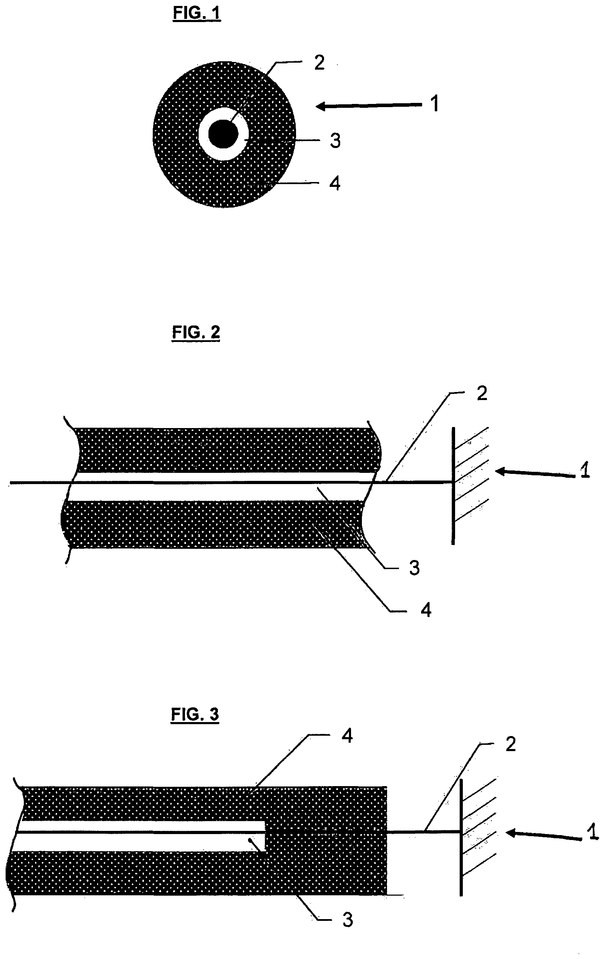

La figure 1 représente une coupe transversale d'un élément détecteur 1 de fluides. Il est constitué d'un fil métallique central 2 recouvert d'une gaine isolante 3, enveloppé d'une gaine expansible conductrice 4.

L'élément détecteur 1 est relié à un système électrique. Un courant électrique circule en permanence dans le fil métallique central 2.

Quand cet élément détecteur 1 entre en contact avec un liquide conducteur, la gaine 4 étant conductrice ne fait pas obstacle au contact entre le liquide conducteur et le fil central 2. Dans ce mode de réalisation, la gaine 3 est là essentiellement pour assurer une protection mécanique et contre la corrosion, et éviter les contacts du fil central 2 avec des surfaces ou des pièces conductrices (plaques, tresses, poussières...) qui seraient présentes aux alentours de l'élément détecteur 1.

Quand l'élément détecteur 1 entre en contact avec un fluide non conducteur, la gaine expansible conductrice 4 s'imprègne de ce liquide et gonfle.

La gaine expansible conductrice 4 est fabriquée dans un matériau silicone, naturellement isolant, contenant des particules conductrices. Cette composition lui confère une conductivité connue, et, par conséquent, une résistance connue. Quand la gaine expansible conductrice 4 subit cette expansion, sa conductivité diminue et sa résistance augmente.

La figure 2 est une coupe longitudinale de l'élément détecteur de fluides 1. Le fil central 2 est relié à la terre à une extrémité. Il est enveloppé dans la gaine isolante 3. Autour de cette gaine isolante est déposée la gaine expansible conductrice 4.

La figure 3 est une coupe longitudinale de l'élément détecteur de fluides 1 au niveau de son extrémité. Dans cette réalisation, le fil métallique central 2 est dépourvu de gaine isolante 3 sur une certaine longueur. Il est ainsi en contact direct avec la gaine expansible conductrice 4.

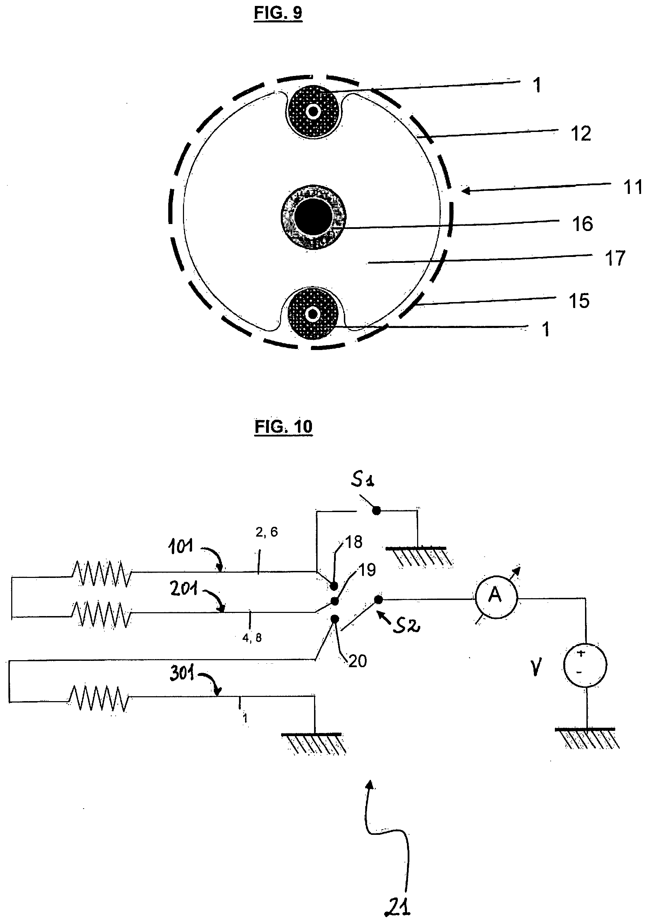

Cette caractéristique permet de fermer le circuit électrique formé par l'élément détecteur (1) quand il est relié au système électronique décrit ci-après en relation avec la figure 10. Ainsi, le courant électrique peut circuler en permanence.

La gaine expansible conductrice (4) présentant une conductivité connue, une augmentation de la résistance au passage du courant indique un gonflement de la dite gaine expansible conductrice (4). Ce gonflement est provoqué par un contact avec un liquide non conducteur. La baisse de la résistance indique que le courant circule par une voie supplémentaire, c'est-à-dire que le détecteur est en contact avec un liquide conducteur.

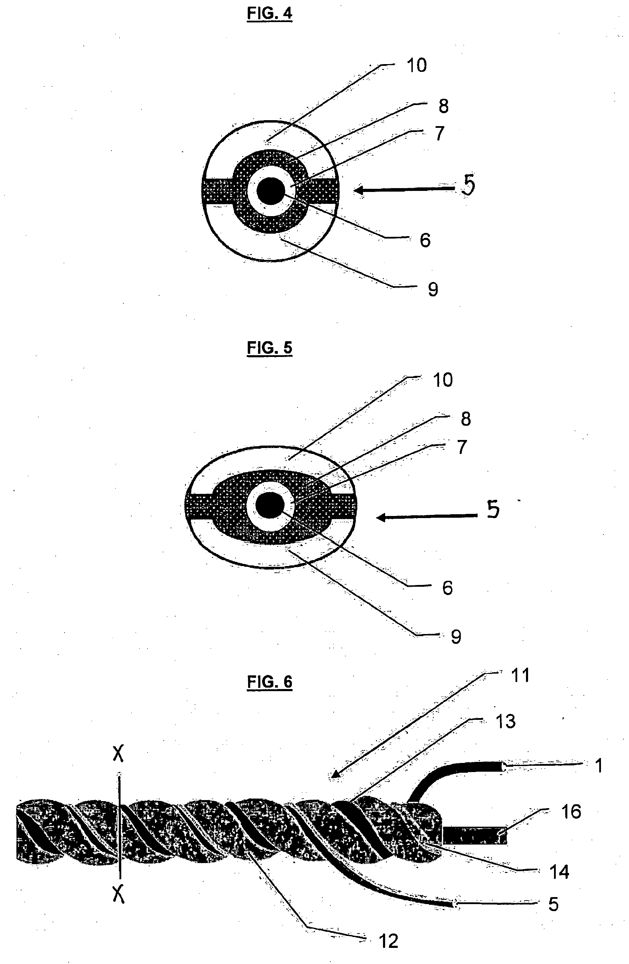

La figure 4 représente une coupe transversale d'un élément détecteur de fluides de section ronde (5). Il est constitué d'un fil central métallique (6), enveloppé d'une gaine isolante (7), elle-même entourée d'une gaine expansible conductrice (8), qui est à son tour recouverte d'une gaine isolante partielle, constituée d'une partie inférieure (9) et d'une partie supérieure (10).

La détection des liquides conducteurs et non conducteurs procède de manière identique que pour l'élément détecteur (1) de la figure 1. La gaine isolante partielle en deux parties (9, 10) est faite de matériau silicone coloré.

La figure 5 représente une coupe transversale d'un élément détecteur de fluides de section ovale (5). Il est constitué de manière identique à l'élément détecteur de la figure 4 en présentant une forme extérieure ovale. La section ovale de l'élément détecteur (5) présente l'intérêt de pouvoir positionner facilement l'élément détecteur (5) autour du corps principal du câble détecteur (voir figure 6). En effet, l'élément détecteur (5) ne peut pas pivoter dans sa rainure, contrairement au mode de réalisation illustré par la figure 4 d'un élément détecteur (5).

L'élément détecteur peut adopter une section ronde, carrée, elliptique, rectangulaire ou de toute autre forme, afin d'optimiser le processus de fabrication du câble détecteur. Par exemple, si l'on réalise un dépôt par bandes de la gaine isolante partielle, on pourra préférer un élément détecteur présentant une section carrée ou rectangulaire afin de faciliter la fabrication.

Dans le mode de réalisation où l'élément détecteur comporte une gaine isolante partielle, l'orientation du dit élément devient une caractéristique importante. En effet, l'élément détecteur est orienté de telle façon que les deux zones où la gaine isolante partielle affleure à la surface soient, respectivement, en contact avec le corps principal du câble détecteur et le milieu extérieur, les deux zones où la gaine expansible conductrice affleure à la surface étant alors orientées vers les parois latérales des rainures. Ainsi la surface conductrice n'est pas en contact avec l'environnement, ce qui évite les fausses alertes en cas de contact avec un objet conducteur (pique, plaque, clou, etc...).

Cette orientation souhaitée peut être obtenue par l'enroulement manuel ou mécanique et contrôlée par la vérification visuelle, grâce à la couleur différente des deux gaines.

La figure 6 représente une vue de profil du câble détecteur (11) de fuites de liquides. Dans ce mode de réalisation, le câble détecteur (11) est pourvu d'un élément détecteur de fluides (1) et d'un élément détecteur de fluides (5). Les deux éléments détecteurs (1, 5) sont enroulés autour d'un corps principal (12). Chaque élément détecteur est logé dans une rainure respective (13, 14), dont la largeur est supérieure au diamètre de l'élément respectif (1, 5).

Les deux éléments détecteurs (1, 5) sont enroulés en spirale autour du corps principal (12), dans des positions diamétralement opposées.

Comme expliqué précédemment, le fil central (2, 6) de chaque élément détecteur (1, 5) est dénudé au bout du câble détecteur (11) et mis en contact avec sa gaine expansible conductrice respective (4, 8) afin de créer un circuit électrique fermé et de permettre la circulation du courant électrique.

Le câble détecteur (11) est disposé de manière appropriée sous l'installation à surveiller : cuve de stockage, conduite, tuyau, réservoir ou autre installation de stockage ou de transport de liquides conducteurs ou non conducteurs. Ainsi en cas de fuites de la dite installation, il sera en contact avec les liquides répandus. Il est connecté à un système de veille et d'alarme qui le place en permanence sous tension. Les fuites sont détectées par les variations de la circulation du courant électrique, comme exposé aux figures 1 et 2.

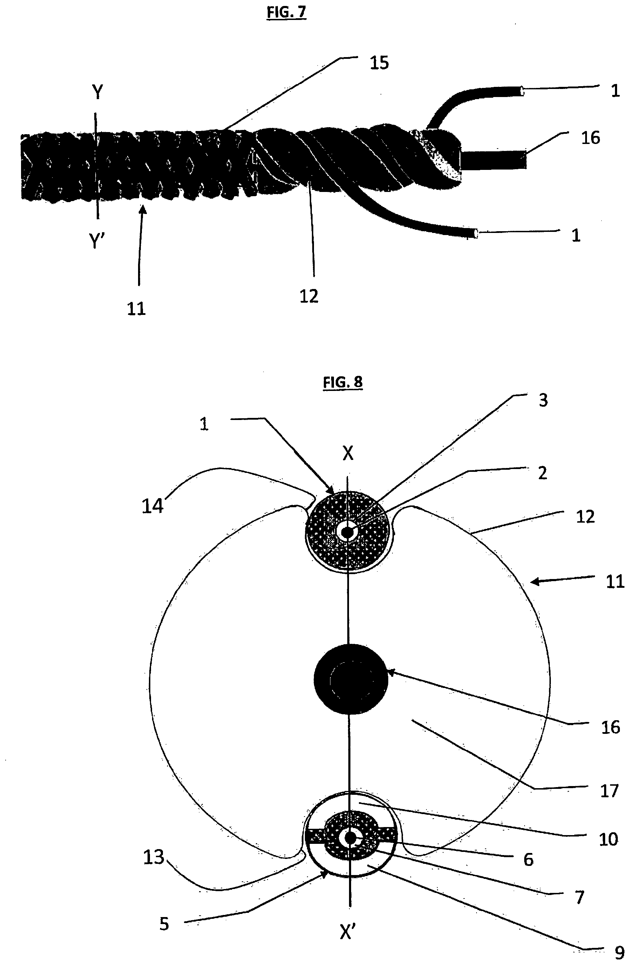

La figure 7 représente une vue de profil d'un câble détecteur de fuites de liquides (11). Dans ce mode de réalisation particulier, le câble détecteur 11 est inséré dans une gaine tressée ajourée (15) et il est muni de deux éléments détecteurs de fluides (1).

Dans ce mode de réalisation, la gaine tressée ajourée (15) est faite dans une matière plastique isolante, par exemple une matière silicone, et peut remplacer la gaine isolante partielle (9, 10) de l'élément détecteur de fluides (5). On peut alors utiliser deux éléments détecteurs de fluides (1), qui sont associées à la gaine tressée ajourée (15) .

La figure 8 est une coupe transversale du câble détecteur de fuites de liquides (11) de la figure 6, selon l'axe X-X'. Le câble détecteur (11) est constitué d'un corps principal (12), lui-même composé d'un support d'extrusion central (16) et d'un corps extrudé (17). Ce corps principal est muni d'un élément détecteur de fluides (1) et d'un élément détecteur de fluides (5), enroulés autour de lui en spirale, de manière à être toujours diamétralement opposés l'un à l'autre. La gaine isolante partielle (9, 10) de l'élément détecteur de fluides (5) est positionnée de manière à ce qu'une partie (9) soit placée au contact du corps principal (12), et l'autre partie (10), diamétralement opposée, soit face au milieu extérieur.

Le support d'extrusion central (16) peut être une tige métallique gainée de matière plastique, qui est le mode de réalisation représenté sur cette figure, un cylindre de matière plastique ou tout autre composant pouvant supporter l'extrusion du corps extrudé (17).

Le corps extrudé (17) est fabriqué par extrusion d'une matière plastique, par exemple du silicone, sur le support d'extrusion central (16). Quand cette matière plastique est encore malléable, on y forme les rainures (13, 14) destinées à loger les éléments détecteurs (1, 5), soit en enroulant autour du corps principal (12) une fibre ou un fil d'un diamètre supérieur à ceux des éléments détecteurs (1, 5), soit en enroulant les éléments détecteurs (1, 5) eux-mêmes, associés à un ou plusieurs autres fils, ceci afin de former des rainures (13, 14) plus larges que les fils détecteurs (1, 5) .

On peut également créer les rainures par enlèvement mécanique, découpage laser ou tout autre procédé connu approprié.

Ainsi, au contact des liquides non conducteurs, les gaines expansibles conductrices (4, 8) subissent une expansion volumique qui nécessite un espace supérieur. On peut également, de manière alternative, réaliser les rainures (13, 14) par enlèvement mécanique du matériau composant le corps principal (12), par découpage au laser, ou tout autre procédé connu de l'homme de l'art.

La rainure (13, 14) doit, de préférence être entre 5% et 200% plus grande que le diamètre du fil détecteur (1, 5).

La figure 9 est une coupe transversale du câble détecteur (11) de la figure 7, selon l'axe Y-Y'. Le câble détecteur (11) est ici enveloppé dans une gaine ajourée tressée (15). Le câble (11) est composé d'un corps principal (12), et de deux éléments détecteurs de fluides (1, 1).

Le câble détecteur (11) est obtenu selon la méthode décrite ci-dessus.

La gaine tressée ajourée (15) est fabriquée isolément par extrusion, et le câble détecteur (11) est ensuite inséré à l'intérieur.

La gaine isolante partielle peut être déposée sur la gaine expansible conductrice selon une construction de revêtement en bandes, une extrusion en double couche, un deuxième revêtement par trempage, une deuxième extrusion de mono-couche ou toute autre méthode appropriée bien connue de l'homme de l'art.

Il est cependant nécessaire que la gaine isolante partielle soit solidement fixée à la gaine expansible conductrice. On s'en assurera par une méthode telle que la co-extrusion des deux gaines, l'extrusion de deux couches de matériaux compatibles, le dépôt d'un matériau de liaison, ou toute autre méthode connue appropriée.

La gaine isolante partielle peut être remplacée par une gaine tressée ajourée entourant le câble détecteur sur toute sa longueur. La gaine tressée ajourée est fabriquée par extrusion d'une matière plastique et le câble détecteur est glissé à l'intérieur par la suite.

Cette gaine tressée ajourée joue alors le même rôle de protection des éléments détecteurs contre les contacts avec des objets conducteurs de l'environnement, ce qui produirait des fausses alertes.

La figure 10 représente le schéma électrique d'un système de veille et d'alarme (21) relié au câble détecteur selon l'invention. Le système (21) est en permanence sous tension. Le circuit désigné 101 représente le fil central (2, 6) de l'élément détecteur de fluides (1, 5). Le circuit désigné 201 représente la gaine expansible conductrice (4, 8) de l'élément détecteur (1, 5). En bout de câble (11), le fil central (2, 6) est dénudé est mis en contact avec la gaine expansible conductrice (4, 8) pour fermer le circuit électrique. Le circuit 301 représente un deuxième fil détecteur facultatif tel que l'élément détecteur (1) représenté sur la figure 8. A titre de variante, les éléments 101-201 et 301 peuvent être de structure identique. S1 et S2 sont des interrupteurs. V est une source de tension reliée au circuit. A est un ampèremètre relié au circuit.

L'interrupteur S1 peut prendre deux positions, ouvert ou fermé.

L'interrupteur S2 peut adopter trois positions : haute (18), médiane (19) et basse (20).

Quand l'interrupteur S1 est ouvert, le fil central (2, 6) n'est pas relié à la terre.

Si l'interrupteur S2 est en position haute (18) ou médiane (19), l'ampèremètre A mesure le courant circulant entre les parties 201 et 301.

Si l'interrupteur S2 est en position basse (20), alors l'ampèremètre A mesure le courant circulant dans la partie 301, c'est-à-dire que cette configuration permet de vérifier l'intégrité de cette partie du système.

Quand l'interrupteur S1 est fermé, le fil central (2, 6) est relié à la terre. On utilise cette position uniquement quand S2 est en position médiane 19, et l'ampèremètre A mesure alors le courant circulant dans les circuits 201 et 101, ce qui permet de déterminer la résistance nominale Rn de l'ensemble. On peut alors définir un seuil d'alerte correspondant à une fraction de Rn, déterminé en fonction des besoins de l'utilisateur.

Quand la résistance mesurée R est supérieure à la résistance nominale Rn de l'élément 201, cela signifie que le câble détecteur (11) est en contact avec un liquide non conducteur suite au gonflement de la gaine (4, 8). Quand R est inférieur à Rn, cela signifie que le câble détecteur (11) est en contact avec un liquide conducteur.

En position haute (18), l'ampèremètre A mesure une première tension i₁ et en position médiane (19), une deuxième tension i₂. La comparaison de ces deux tensions permet de déterminer la position du contact entre le détecteur et le liquide conducteur.

Si i₁ est supérieur à i₂, alors le point de contact est plus proche de l'extrémité distale du câble, par rapport à S2. Si i₂ est supérieur à i₁, alors le point de contact est plus proche de l'extrémité proximale du câble par rapport à S2. Si les deux tensions sont égales, le point de contact est environ au milieu du câble détecteur.

Une utilisation alternative de ce système (21) n'utilise pas la position haute (18) de S2. La position basse (20) permet alors de déterminer l'intégrité de l'élément 301. La position médiane (19) permet de déterminer la résistance de l'élément 201. Quand cette résistance R est supérieure à la résistance nominale Rn de l'élément 201, cela signifie que le câble détecteur (11) est en contact avec un liquide non conducteur suite au gonflement de la gaine (4, 8). Quand R est inférieur à Rn, cela signifie que le câble détecteur (11) est en contact avec un liquide conducteur.

On voit que le détecteur allongé du type câble selon l'invention est capable de détecter à la fois la présence de liquides conducteurs tels que l'eau, les bases ou les acides et la présence de liquides non conducteurs tels que les hydrocarbures.

C'est le fil métallique central (2, 6) qui assure la détection des liquides conducteurs et la gaine expansible conductrice (4, 8) celle des liquides non conducteurs. La dite gaine expansible conductrice (4, 8) assure en outre une protection mécanique et contre la corrosion du dit fil métallique central (2, 6).

La gaine expansible conductrice (4, 8) peut être constituée de différents matériaux bien connus pour leurs propriétés adaptées : des caoutchoucs naturels ou synthétiques, des élastomères de silicone, du celluloïd, des polymères styréniques ou d'autres.

## Revendications

1. Système (21) de détection de fuites de liquides comprenant un câble détecteur (11) de fuites de liquides conducteurs et non conducteurs par exemple stockés dans une cuve ou circulant dans une conduite, ledit câble détecteur (11) étant composé d'un corps principal (12) et d'au moins un élément détecteur (1, 5) constitué d'un fil métallique central (2, 6) dans lequel circule en permanence un courant électrique et entouré d'une gaine isolante (3, 7), elle-même intégrée dans une gaine expansible conductrice (4, 8) constituée par un matériau isolant silicone contenant des particules conductrices de sorte que sa résistance augmente lorsque la gaine subit une expansion au contact d'un fluide non conducteur, le fil (2, 6) et la gaine expansible conductrice (4, 8) étant disposés de manière à entrer en contact avec les fluides conducteurs et non conducteurs, **caractérisé en ce que** ledit système (21) comprend un premier circuit (101) représenté par le fil métallique central (2, 6), un deuxième circuit (201) représenté par la gaine expansible conductrice (4, 8), une source de tension (V) relié à un ampèremètre (A) apte à mesurer le courant circulant dans le premier circuit (101) et le deuxième circuit (201) de façon à déterminer une résistance nominale (Rn) et une résistance mesurée (R) de l'ensemble constitué par le premier circuit (101) et le deuxième circuit (201), un premier interrupteur (S1) et un deuxième interrupteur (S2), ledit fil métallique central (2, 6) étant dénudé au bout dudit câble détecteur (11) et mis en contact avec ladite gaine expansible conductrice (4, 8) de façon à former un circuit fermé dans lequel ledit fil métallique central (2,6) est relié à une terre par l'intermédiaire du premier interrupteur (S1) et ladite gaine expansible conductrice (4, 8) est reliée à l'ampèremètre (A) par l'intermédiaire du deuxième interrupteur (S2), ledit système (21) étant configuré de sorte que si ladite résistance nominale (Rn) est supérieure à ladite résistance mesurée (R), la présence d'un fluide conducteur est détectée et, si ladite résistance nominale (Rn) est inférieure à ladite résistance mesurée (R), la présence d'un fluide non conducteur est détectée.

2. Système (21) selon la revendication 1, **caractérisé en ce que** le corps principal (12) est réalisé par extrusion d'une matière plastique.

3. Système (21) selon la revendication 1 ou 2, **caractérisé en ce que** le corps principal (12) est extrudé sur un support central (16) se présentant sous la forme soit d'une tige de matière plastique, soit d'une tige métallique enrobée de matière plastique.

4. Système (21) selon l'une quelconque des revendications 1 à 3, **caractérisé en ce que** l'élément détecteur (1, 5) est enroulé en spirale autour du corps principal (12).

5. Système (21) selon les revendications précédentes, **caractérisé en ce que** l'élément détecteur (1, 5) est constitué d'un fil métallique central (2, 6) recouvert d'une gaine isolante (3, 7) elle-même recouverte d'une gaine conductrice expansible (4, 8).

6. Système (21) selon la revendication 5, **caractérisé en ce que** la dite gaine conductrice expansible (4, 8) de l'élément détecteur (1, 5) est partiellement recouverte d'une gaine isolante (9, 10), l'ensemble présentant en section une forme circulaire ou ovale.

7. Système (21) selon la revendication 6, **caractérisé en ce que** la dite gaine isolante (9, 10) est constituée de matériau polymère.

8. Système (21) selon l'une quelconque des revendications 5 à 7, **caractérisé en ce que** la gaine conductrice expansible (4, 8) et la gaine partielle isolante (9, 10) sont fabriquées à l'aide de matériau silicone.

9. Système (21) selon l'une quelconque des revendications 6 à 8, **caractérisé en ce que** l'élément détecteur (5) partiellement recouvert de la gaine isolante (9, 10) est inerte face aux dépôts de poussières métalliques.

10. Système (21) selon l'une quelconque des revendications précédentes, **caractérisé en ce que** le câble détecteur (11) est inséré dans une gaine tressée ajourée électriquement isolante (15).

## Patentansprüche

1. System (21) zur Erkennung von Flüssigkeitslecks, aufweisend einen Kabeldetektor (11) von Lecks von leitfähigen und nicht leitfähigen Flüssigkeiten, welche zum Beispiel in einem Tank gespeichert sind oder in einer Leitung zirkulieren, wobei der sogenannte Kabeldetektor (11) aus einem Hauptkörper (12) und mindestens einem Detektorelement (1, 5) zusammengesetzt ist, welches aus einem zentralen Metalldraht (2, 6) gebildet ist, in welchem permanent ein elektrischer Strom fließt und welcher von einem isolierenden Mantel (3, 7) umgeben ist, welcher selbst in einem leitfähigen, ausdehnbaren Mantel (4, 8) integriert ist, welcher aus einem isolierenden Silikonmaterial gebildet ist, welches leitfähige Partikel enthält, so dass sein Widerstand zunimmt, wenn der Mantel eine Ausdehnung in Kontakt mit einem nicht leitfähigen Fluid erfährt, wobei der Draht (2, 6) und der leitfähige, ausdehnbare Mantel (4, 8) angeordnet sind, um mit den leitfähigen und nicht leitfähigen Fluiden in Kontakt zu kommen, **dadurch gekennzeichnet, dass** das sogenannte System (21) einen ersten Stromkreis (101), welcher durch den zentralen Metalldraht (2, 6) dargestellt wird, einen zweiten Stromkreis (201), welcher durch den leitfähigen, ausdehnbaren Mantel (4, 8) dargestellt wird, eine Spannungsquelle (V), die mit einem Amperemeter (A) verbunden ist, welches geeignet ist, den in dem ersten Stromkreis (101) und dem zweiten Stromkreis (201) fließenden Strom zu messen, um einen Nennwiderstand (Rn) und einen gemessenen Widerstand (R) der durch den ersten Stromkreis (101) und den zweiten Stromkreis (201) gebildeten Baugruppe zu bestimmen, einen ersten Schalter (S1) und einen zweiten Schalter (S2) aufweist, wobei der sogenannte zentrale Metalldraht (2, 6) am Ende des sogenannten Kabeldetektors (11) abisoliert und mit dem sogenannten leitfähigen, ausdehnbaren Mantel (4, 8) in Kontakt gebracht ist, um einen geschlossenen Stromkreis zu bilden, in welchem der sogenannte zentrale Metalldraht (2, 6) vermittels des ersten Schalters (S1) mit einer Erde verbunden ist und der sogenannte leitfähige, ausdehnbare Mantel (4, 8) vermittels des zweiten Schalters (S2) mit dem Amperemeter (A) verbunden ist, wobei das sogenannte System (21) dafür ausgelegt ist, um, falls der sogenannte Nennwiderstand (Rn) größer als der sogenannte gemessene Widerstand (R) ist, das Vorhandensein eines leitfähigen Fluids erkannt wird, und, falls der sogenannte Nennwiderstand (Rn) kleiner als der sogenannte gemessene Widerstand (R) ist, das Vorhandensein eines nicht leitfähigen Fluids erkannt wird.

2. System (21) nach Anspruch 1, **dadurch gekennzeichnet, dass** der Hauptkörper (12) durch Extrusion eines plastischen Materials erzielt wird.

3. System (21) nach Anspruch 1 oder 2, **dadurch gekennzeichnet, dass** der Hauptkörper (12) auf einen zentralen Träger extrudiert ist, welcher sich in der Form entweder einer Stange aus plastischem Material oder einer mit plastischem Material umwickelten Metallstange darstellt.

4. System (21) nach irgendeinem der Ansprüche 1 bis 3, **dadurch gekennzeichnet, dass** das Detektorelement (1, 5) in Spiralen um den Hauptkörper (12) herum gewickelt ist.

5. System (21) nach den vorhergehenden Ansprüchen, **dadurch gekennzeichnet, dass** das Detektorelement (1, 5) von einem zentralen Metalldraht (2, 6) gebildet ist, welcher mit einem isolierenden Mantel (3, 7) überzogen ist, welcher selbst mit einem leitfähigen, ausdehnbaren Mantel (4, 8) überzogen ist.

6. System (21) nach Anspruch 5, **dadurch gekennzeichnet, dass** der sogenannte leitfähige, ausdehnbare Mantel (4, 8) des Detektorelements (1, 5) teilweise mit einem isolierenden Mantel (9, 10) überzogen ist, wobei die Baugruppe im Querschnitt eine kreisförmige oder ovale Form aufweist.

7. System (21) nach Anspruch 6, **dadurch gekennzeichnet, dass** der sogenannte isolierende Mantel (9, 10) aus Polymermaterial gebildet ist.

8. System (21) nach irgendeinem der Ansprüche 5 bis 7, **dadurch gekennzeichnet, dass** der leitfähige, ausdehnbare Mantel (4, 8) und der partielle, isolierende Mantel (9, 10) mit Hilfe von Silikonmaterial hergestellt sind.

9. System (21) nach irgendeinem der Ansprüche 6 bis 8, **dadurch gekennzeichnet, dass** das mit dem isolierenden Mantel (9, 10) teilweise überzogene Detektorelement (5) gegenüber Metallstaubablagerungen inert ist.

10. System (21) nach irgendeinem der vorhergehenden Ansprüche, **dadurch gekennzeichnet, dass** der Kabeldetektor (11) in eine durchbrochene, elektrisch isolierende, geflochtene Hülle (15) eingesetzt ist.

## Claims

1. Liquid leak detection system (21) comprising a sensor cable (11) for leaks of conductive and non-conductive liquids, for example stored in a tank or flowing in a pipe, said sensor cable (11) being comprised of a main body (12) and at least one sensor element (1, 5) formed of a central metallic wire (2, 6) through which an electrical current is constantly circulating and surrounded by an insulating sheath (3, 7), itself integrated into an expandable conductive sheath (4, 8) constituted by a silicon insulating material containing conductive particles such that its resistance is increased when the sheath expands in contact with a non-conductive liquid, the wire (2, 6) and the expandable conductive sheath (4, 8) being arranged such that they enter into contact with the conductive and non-conductive liquids, **characterized in that** said system (21) comprises a first circuit (101) represented by the central metallic wire (2, 6), a second circuit (201) represented by the expandable conductive sheath (4,8), a voltage supply (V)connected to an ammeter (A) able to measure the current circulating in the first circuit (101) and the second circuit (201) so as to determine a nominal resistance (Rn) and a measured resistance (R) of the assembly formed by the first circuit (101) and the second circuit (201), a first switch (S1) and a second switch (S2), said central metallic wire (2, 6) being stripped at the end of said sensor cable (11) and put in contact with said expandable conductive sheath (4, 8) such as to form a closed circuit in which said central metallic circuit (2, 6) is earthed by means of the first switch (S1) and said expandable conductive sheath (4, 8) is connected to the ammeter (A) by means of the second switch (S2), said system (21) being configured such that if said nominal resistance (Rn) is greater than said measured resistance (R), the presence of a conductive liquid is detected and, if said nominal resistance (Rn) is lower than said measured resistance (R)the presence of a non-conductive liquid is detected.

2. Liquid leak detection system (21) according to claim 1, **characterized in that** the main body (12) is made by extruding a plastic material.

3. Liquid leak detection system (21) according to claim 1 or 2, **characterized in that** the main body (12) is extruded on a central support (16) in the form of either a plastic rod or a metal rod coated with plastic material.

4. Liquid leak detection system (21) according to one of claims 1 to 3, **characterized in that** the sensor element (1, 5) is spirally wound around the main body (12).

5. Liquid leak detection system (21) according to the preceding claims, **characterized in that** the sensor element (1, 5) consists of a central wire (2, 6) covered by an insulating sheath (3, 7) itself covered with an expandable conductive sheath (4, 8).

6. Liquid leak detection system (21) according to claim 5, **characterized in that** the said expandable conductive sheath (4, 8) of the sensor element (1, 5) is partially covered with an insulating sheath (9, 10), the assembly having in section a circular or an oval shape.

7. Liquid leak detection system (21) according to claim 7, **characterized in that** the said insulating sheath (9, 10) is made of polymeric material.

8. Liquid leak detection system (21) according to one of claims 5 to 7, **characterized in that** the expandable conductive sheath (4, 8) and the insulating partial sheath (9, 10) are made of silicone material.

9. Liquid leak detection system (21) according to one of claims 6 to 8, **characterized in that** the sensor element (5) partly covered by the insulating sheath (9, 10) is inert against metal dust deposits.

10. Liquid leak detection system (21) according to any one of the preceding claims, **characterized in that** it is inserted into an electrically insulating perforated braided sheath (15).
